# EUROPEAN PATENT SPECIFICATION

(11) **EP 2 532 879 B1**
(45) Date of publication and mention of the grant of the patent: **19.03.2014**
(21) Application number: 11168879.2
(22) Date of filing: 07.06.2011
(51) Int. Cl.: F03D 1/00, F03D 1/06

(54) **Assembly and/or maintenance of a wind turbine**
Montage und/oder Instandhaltung einer Windturbine
Montage et/ou maintenance d'une éolienne

(43) Date of publication of application: 12.12.2012
(73) Proprietor: Siemens Aktiengesellschaft, 80333 München (DE)
(72) Inventor: Mikkelsen, Jens Arne, 7400 Herning (DK); Stiesdal, Henrik, 5000 Odense C (DK)

(56) References cited:
- EP-A2- 2 228 533
- CA-A1- 2 492 353
- ES-A1- 2 338 746

## Description

The present invention concerns a method for assembly and/or maintenance of a wind turbine. It also concerns a mounting device for such purpose.

The assembly of rotor blades to a wind turbine as well as the disassembly for the purpose of maintenance - i.e. disassembly in part or complete - has proven to be a critical process. Such rotor blades of modern wind turbines are typically very large, which means that their longitudinal extension may for instance amount to about 50 metres. The rotor blades have to be attached to a hub or disassembled from it, which is for example (according to EP 2 003 333 A1) accomplished by placing the hub onto the ground and inserting the rotor blades into holes of the hub on site. This however implies that there needs to be a lot of free space on the ground near or at the wind turbine's site. Such free space can be available in onshore conditions but even is not always available in these cases. For instance, in mountainous regions or regions within or close to forests such space is not available. All the more this is the case for installation of offshore wind turbines, where typically no ground is available at all on which a hub can be placed for installation of blades.

It is thus often necessary to install each of the blades one at a single time on the hub which hub is rotatably attached to the nacelle on top of the tower of the wind turbine. Such solution is proposed in EP 1 925 582 B1. This procedure is quite time-consuming, in particular due to the often bad wind conditions in high altitudes during installation.

There is a particular problem when rotor blades are to be installed onto a so-called direct drive wind turbine. In such direct drive wind turbines there is no gearbox between the hub and the generator, but rather the rotational movement of the rotor (i.e. of the hub with the rotor blades) is directly transferred into electric power in a direct-drive generator. In such case it is hardly possible to rotate or turn the hub together with the blades with a standard turn motor as would be possible in wind turbines which have a gearbox.

The Spanish patent application ES 2 338 746 describes a mounting device for assembly of a wind turbine with a platform which can be moved along the vertical extension of a tower of a wund turbine on which platform there can be positioned a generator and a hub. At a certain level above ground, the rotor blades can then be attached to the hub on the platform.

EP 2 228 533 A2 proposes a platform for transport of a hub and rotor blades to an offshore location. When arrived at this location, the platform can be raised above ground and there, the rotor blades can be attached to the hub on the platform.

Both of these proposed solutions show a certain degree of inflexibility during the mounting process of the rotor blades to the hub. Whereas in ES 2 338 746 the rotor blades can only be attached to the hub at a substantial height due to the length of the rotor blades, the hub in EP 2 228 533 A2 is positioned such that it needs to be lifted and brought into the designated mounting position with respect to a nacelle to which it needs to be fixed. Both solutions are thus connected with certain complications.

To sum up, the installation of rotor blades on the hub of a wind turbine can be very complicated and also comparatively dangerous. Certainly, the same applies to a partial or full uninstalling, i.e. disassembly, of rotor blades from the hub for maintenance or exchange purposes.

It is thus the object of the invention to provide for a possibility to enhance assembly and/or maintenance of a wind turbine with respect to installation or uninstalling of rotor blades to and/or from the hub. In particular, such enhancements may refer to making the assembly and/or maintenance more effective and/or less time-consuming and/or implying less effort of staff during the procedure. As an additional feature, cost savings, for instance by saving time of the use of a crane for the installation of the rotor blades, can also be summarized under enhancements of the assembly and/or maintenance.

This object is met by a method according to claim 1, and a mounting device according to claim 13.

Thus, in the context of the above-mentioned method at least one rotor blade is attached to and/or detached from a hub of the wind turbine which hub is removably fixed to a mounting device positioned at a substantial distance above a ground surface level.

Furthermore, the mounting device comprises at least one hinge along which the hub can be rotated from a first position into a second position. Such a first position may define a kind of assembly position or in this assembly position is i.e. such position in which the method according to the invention is carried out. The second position is which is different from the first position can then be a position which corresponds with an orientation of the harp together with the rotor blades which the hub also has when assembled, i.e. connected to the nacelle and/or generator in a final operation position of the wind turbine. For instance the first position may define an orientation of the harp in which the rotor blades are orientated essentially horizontally, as outlined above. The second position can then be, i.e. in the way in which they will be orientated during operation of the wind turbine is. Such operation of the wind turbine is defined by the hub rotating around the rotation axis is along which the forces rotational forces will be transferred into a generator which then transfers the kinetic energy of the rotation into electric power.

The mounting device used in this context is thus an additional device to which the hub is fixed before it will later be fixed to a nacelle of the wind turbine and thus to a drivetrain of the wind turbine or directly to a (direct drive) generator which is attached to the nacelle. This mounting device and the hub are lifted to a substantial distance above the ground surface level - whereby it may be noted that it is preferred, but not necessary that both are connected to each other before the lifting. It is, however, also possible to take them up there separately and connect them either during the lifting process or when they have reached the position at a substantial distance above a ground surface level.

It is preferred that such a substantial distance exceeds an average size of an adult man, preferably it is higher than a tree, i.e. higher than 10 metres, and most preferred this distance is more than the longitudinal extension of the rotor blade which is to be attached to the hub, which today is typically in a distance of 50 to 60 metres above ground. In other words, the mounting device together with the hub is not positioned on the ground level or slightly above, for instance by means of some distancing feet, but is rather positioned much higher, i.e. much closer to the nacelle to which the hub is later attached. In this context it may be noted that the ground surface level may be the level of a solid ground, but also it may mean the sea level in case of an offshore application of the wind turbine. In such cases in which the ground level is uneven, for instance in mountaineous regions, the ground surface level is considered to be that horizontal level which extends from the point where the tower of the wind turbine projects out of the ground into the air.

Preferably all rotor blades of the wind turbine are attached to and/or detached from the hub. In the case of assembly the blades are attached to the hub and in the case of maintenance the blades are detached from the hub. Today's wind turbines typically comprise three rotor blades but certainly within the context of the invention less or more than three rotor blades can be installed on the hub just as necessary.

The hub in this context need not necessarily be completely assembled. It is also possible to use parts of a hub installed on the mounting device and to assemble the rest of the hub either on the mounting device or after connecting parts of the hub on the nacelle and/or generator of the wind turbine. In this sense the "hub" may just comprise a skeleton of a hub comprising at least those parts which are necessary to hold the rotor blades of the wind turbine so that they can later be transferred together with the skeleton of the hub to the nacelle and/or so that the hub can later be arranged in such a way that it firmly holds the rotor blades in their designated place.

The hub is removably fixed to the mounting device, which means that it can be directly fixed to the mounting device or indirectly, for instance by utilizing intermediate additional devices bridging some distance between the mounting device and the hub.

The principle of the invention is thus twofold. Firstly, a mounting device to which the hub is attached is used as an add-on and secondly this mounting device together with the hub is positioned at a substantial distance from the ground level. Positioning the mounting device at this substantial distance can for instance be accomplished by means of non-stationary devices such as cranes or helicopters to which the mounting device is attached. Preferably, as will be outlined in more detail below, the mounting device is positioned by a stationary device while the method according to the invention is carried out.

A mounting device according to the invention comprises connection means for connecting it to a holding device. Such holding device is realized to hold the mounting device in a position at a substantial distance above a ground surface level. The mounting device further comprises an interface realized to removably fix a hub of a wind turbine to it. Such interface may for instance comprise locks and/or holes and/or bolts corresponding with locks and/or bolts and/or holes in the hub or any other holding arrangements which facilitate the attachment of the hub to the mounting device. In other words, the mounting device by its connection means can be connected to a holding device which serves to hold the mounting device in the desired position, whereas at the same time the mounting device via its interface can connect to the hub which it then holds in the desired position.

Particularly advantageous embodiments and features of the invention are given by the dependent claims, as revealed in the following description. Thereby, features revealed in the context of the method may also be realized in the context of the mounting device and vice versa.

One possibility of how to position the mounting device at a substantial distance above the ground level is to construct a tower or a pillar of its own to which the mounting device is then attached. For instance, the mounting device may be attached on top of such tower or pillar, but also anywhere along a tower's/pillar's longitudinal extension below the top. It is however preferred that the mounting device is directly or indirectly connected to a wind turbine.

In this context it is important that throughout the present application, the expression "wind turbine" must be interpreted rather broadly so that it also comprises a wind turbine which is not yet completely assembled. A wind turbine in this context thus comprises at least parts of a tower of a wind turbine yet to be finished, preferably the complete tower.

If the mounting device is connected to such wind turbine, an additional construction beside the wind turbine is not necessary in order to carry out the method according to the invention. This provides for extra cost and time savings as well as savings in material and effort. It is thus particularly advantageous to connect the mounting device to a wind turbine before installation of the hub on the nacelle and/or generator of the wind turbine.

The invention therefore also concerns a wind turbine comprising at least a section of a tower and equipped with a mounting device according to the invention, the wind turbine thus being realized as the holding device of the mounting device.

In principle it is possible to install and/or to uninstall the rotor blades at virtually any angle with reference to the tower of the wind turbine or with reference to the ground surface level. It is preferred that the rotor blade is attached to and/or detached from the hub in an essentially horizontal orientation. In a vertical position the wind can easily interfere with those rotor blades which are currently being attached to the hub so that forces are inflicted upon the hub which make further installation or uninstalling complicated and dangerous. In contrast, when the rotor blades are orientated essentially horizontally, i.e. not more than 45°, preferably not more than 30°, most preferred not more than 15°, from the purely horizontal position, the wind will not have such a strong impact onto the rotor blades and thus onto the harp. Once the rotor blades are completely installed or completely uninstalled, the hub can be rotated into a position which implies a vertical positioning of the rotor blades, so that it then can be further processed, for instance in order to be transferred to the nacelle for further installation. This implies that only for a short period of time winds coming from the side will inflict higher forces onto the hub.

The mounting device may be a device which can be completely taken off the wind turbine once it has been used within the context of the method according to the invention. However, it may also be advantageous if the mounting device is at least in part permanently connected to the wind turbine. At least part of the mounting device will then be considered to be a fixed installation, for instance it may comprise a platform which is permanently connected to the wind turbine so that it is an integral part of it. In particular however, that part which is most preferably permanently connected to the wind turbine is an interface arrangement of the mounting device to which other parts of the mounting device, such as a platform can be attached in order to establish a complete mounting device according to the invention. Such an interface arrangement for example comprises bolts or other fixing devices which project from the wind turbine to its outside so that other parts of the mounting device can be connected to them.

On the other hand, it is also preferred that the mounting device is at least in part temporarily connected to the wind turbine. This implies that at least parts of it will be removed once the method according to the invention has been ended and that these parts need to be reinstalled if one wants to repeat the method at a later stage of time. Both these embodiments mentioned - i.e. with fixed installations and with temporary installations - do not necessarily exclude each other, but can also be combined to a solution where only parts of the mounting device are permanently connected to the wind turbine whereas other parts are only temporarily connected to it.

According to a first embodiment the mounting device is connected, preferably at least partly temporarily, to a nacelle and/or a generator of the wind turbine. For instance, the mounting device can be positioned on top of the nacelle, i.e. on a roof surface of the nacelle facing away from the ground. This way the mounting device is very close to where the hub will later be connected to the nacelle and/or generator, however with the possibility of orientating the hub in a different direction and also with a lot more freedom for operations whilst at the same time providing for safer working conditions for staff. For instance, if the mounting device is positioned on the roof of the nacelle this roof can also be used as a solid working platform on which staff can work during the assembly and/or the maintenance.

According to a second embodiment, the mounting device is connected to a tower of the wind turbine. The first and the second embodiment may be combined, for instance by attaching the mounting device both to the nacelle and/or the generator and to the tower, but it is preferred that only one of these options is chosen.

Connecting the mounting device to the tower of the wind turbine means that it is essentially connected to the wind turbine at one side of it along it longitudinal extension. This has amongst others the advantage that once the assembly or disassembly of the hub with the rotor blades is ended, the hub is already in a position in which it only needs to be lifted vertically and not necessarily horizontally. In addition, the assembly and/or disassembly can be carried out at a lower level then would be the case if the mounting device was connected to the nacelle.

It is thus preferred in this context that the mounting device is connected to the tower at a level below a nacelle level of the wind turbine. Such nacelle level is defined to be that level at which the nacelle is later to be positioned or at which it is already situated during the operations.

At the same time the operation height, i.e. the amount of the substantial distance from the ground level, is preferably not too small. It is thus preferred that the mounting device is positioned above the ground level in a distance of at least the longitudinal extension of the rotor blade. This way it can be made sure that if the rotor blades are in an assembled stated with the hub and are brought into an upright position, i.e. a position in which one of the rotor blades is orientated completely vertically, there is no danger of the tip of this rotor blade hitting the ground because the rotor blade is shorter than the distance of the mounting device to the ground level.

Whereas the mounting device may be a very simple construction comprising for instance not much more than just the interface to the hub and the connection means, it is preferred that the mounting device is constructed in such a way that staff can use it as a kind of support on which they can stand during the operation of the assembly of the rotor blades or their disassembly respectively. It is thus preferred that the mounting device comprises a platform on which preferably staff can stand and/or sit during the operations on the hub. It also comprises preferably at least one beam, more preferred (e.g. for reasons of stability) at least two beams supporting the platform. This means that the platform can be held in place by the beams which can for example be connected to the wind turbine.

It is further preferred that the mounting device is connected, i.e. attached, to the wind turbine through at least one opening in the wind turbine. This opening or hatch may be an opening which only temporarily exists during the operations according to the invention or it may be a permanent opening which is also present after or before carrying out the method according to the invention. For instance, into such an opening / such openings one or several beams of the mounting device can be inserted and be held there in position. This provides for a form fit connection between the wind turbine arrangement and the mounting device which is easy to establish, in particular if such openings have been present already, e.g. for the us of assembly of two sections of the tower. The openings can also be used to provide access by staff to the mounting device.

In order to connect the mounting device to the wind turbine, in particular to the tower of the wind turbine, use can be made of any possible kinds of fixing arrangements such as brackets, ropes, beams inserted into openings or bolts. It is preferred that the mounting device is connected to a tower of the wind turbine using assembly equipment, such as bolts, for assembling two adjacent sections of the tower. It may be noted that in particular the connection of the highest section of the tower is suitable as this is high enough up in the air. This method implies that equipment which is needed anyway for connecting sections of the tower together is at the same time used for fixing the mounting device to the tower. Material can be saved as well as assembly space, time and effort. For instance, bolts which project from a lower section of the tower into the direction of an upper section of the tower and which are to be inserted into the upper section of the tower can be used to fix a part of the mounting device to the tower. For that purpose, the mounting device can be connected to the bolts in at least two, preferably at least four locations, for instance by brackets. Such mentioned parts of the mounting device can in particular be beams supporting a platform. This means that the mounting device is connected to the tower in a region of an interface between the first, i.e. the lower, section and the second, i.e. the upper, section of the tower.

It is most preferred that the mounting device comprises a first part with a first main extension and a second part with a second main extension at least in one mode of operation which second part is hingedly connected to the first part. The first part is preferably stationary and can for example be horizontally orientated, whereas the second part, which is connected to the first part via the hinge, is tiltable along the axis of the hinge. Therefore its main extension can be parallel to the main extension of the first part in one mode of operation whilst it can be brought into a different orientation in another mode of operation.

As outlined before, this tiltable second part may comprise an interface to the hub so that indirectly by tilting away the second part the hub is also tilted away so that it changes its orientation as well as the orientation of those rotor blades which are attached to it.

It is particularly advantageous if the second part is fixable in at least one, preferably in at least two positions with respect to the first part. This can be realized by fixing or locking mechanisms such as brackets or the like which are realized such that they can fix the second part to the first part in a certain position, i.e. distance and/or angle. This way it can then be made sure that once the second part has arrived at a certain position, for example an assembly position or a position for transfer of the hub to the nacelle, the second part will be kept in this position safely up until it is actively released from that position again, i.e. the fixing or locking mechanism is unlocked.

While the method according to the invention is carried out the hub may always remain in the same position with respect to its rotation axis, i.e. that axis around it rotates in operation when in its designated final position and function in the wind turbine. It is however preferred that the hub is rotated along its rotation axis after a rotor blade has been attached and/or detached. By rotating the hub after one rotor blade has been attached and/or detached a next rotor blade can be attached and/or detached in virtually the same position as the previous rotor blade was treated. This means that access to the rotor blade which is currently to be attached and/or detached is made easier for staff because they only have to be present in one particular place during assembly or disassembly.

During the assembly and/or maintenance process one particularly critical point of time is when the hub is taken off the mounting device, i.e. disconnected from it. At this moment the hub is preferably in a position in which the rotor blades are orientated towards the wind, i.e. their main common extension defined by a plane which essentially covers all rotor blades is orientated essentially vertically. Thus, there is a certain danger for staff while disconnecting the hub from the mounting device at the interface of the two. Wind forces will get a grip onto the rotor so that the hub may start rotating. It is thus firstly preferred that a brake and/or locking mechanism is used which keeps the rotor in a certain rotation position without rotating. Further it is preferred that staff are rather be kept away during this procedure and that the hub is released by remote control from the mounting device after attachment and/or detachment of at least one rotor blade. This way that particularly critical part of the procedure is easier to control and associated with less danger for staff. For instance, a person on the ground surface level can send orders to an actor located in proximity of the interface between the hub and the mounting device which actor disconnects the connection between the two.

Other objects and features of the present invention will become apparent from the following detailed descriptions considered in conjunction with the accompanying drawings. It is to be understood, however, that the drawings are designed solely for the purposes of illustration and not as a definition of the limits of the invention.

In the drawings, like reference numbers refer to like objects throughout. Objects in the diagrams are not necessarily drawn to scale.
Fig. 1 shows a schematics side view onto a tower of a wind turbine according to the state of the art,
Fig. 2 shows a view from above onto a mounting device according to a first embodiment of the invention,
Fig. 3 shows a side view of the same mounting device as in Fig. 2,
Fig. 4 shows a section view of a tower as shown in Fig. 1 equipped with the mounting device according to Figs. 2 and 3,
Fig. 5 shows a side view of the same tower and mounting device as in Fig. 4 the mounting device being in a first position,
Fig. 6 shows a side view of the same tower and mounting device as in Figs. 4 and 5 the mounting device being in an intermediate position,
Fig. 7 shows a front view of the same tower and mounting device as in Figs. 4 to 6 the mounting device being in a second position,
Fig. 8 shows a side view of a wind turbine with a mounting device according to a second embodiment of the invention, the mounting device being in a first position,
Fig. 9 shows a view from above onto the same wind turbine and mounting device as in Fig. 8,
Fig. 10 shows the same arrangement as in Fig. 9 in a partial side view with the mounting device in a second position,
Fig. 11 shows the same arrangement as in Fig. 10 in a front view.

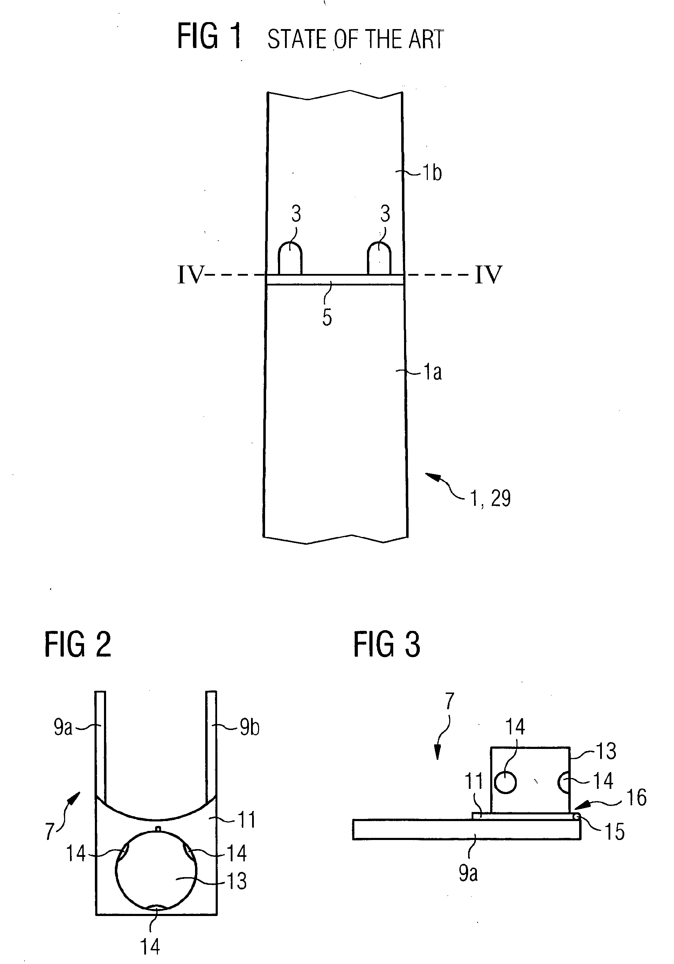

Figure 1 shows a tower 1 of a wind turbine 29 with a lower tower section la and an upper tower section 1b which sections 1a, 1b are interconnected in an interface region 5 so that the upper tower section 1b stands on top of the lower tower section 1a and is firmly connected to the latter. The upper tower section 1b comprises two openings 3 at its lower end facing the interface region 5. The tower 1 is a part of a wind turbine 29 which also comprises a nacelle (not shown) with a rotor (not shown) which are both assembled on top of the tower 1.

In order to equip the nacelle and/or a generator of the wind turbine 29 with a rotor is it is necessary to fix a hub with rotor blades to the nacelle and/or to the generator. For that purpose use is made of a method according to the invention.

Figures 2 and 3 show a mounting device 7 which can be used in the context of this method. The mounting device 7 comprises two horizontal beams 9a, 9b which support a platform 11. The platform 11 is connected to the beams 9a, 9b via a hinge 15. The platform 11 comprises an interface 16 realized to connect a hub 13 of the wind turbine 29 to the mounting device 7. The hub 13 can thus be firmly connected temporarily to the platform 11, i.e. to the mounting device 7. In the hub 13 there are three openings 14 which are to accommodate rotor blades (not shown) of the wind turbine 29.

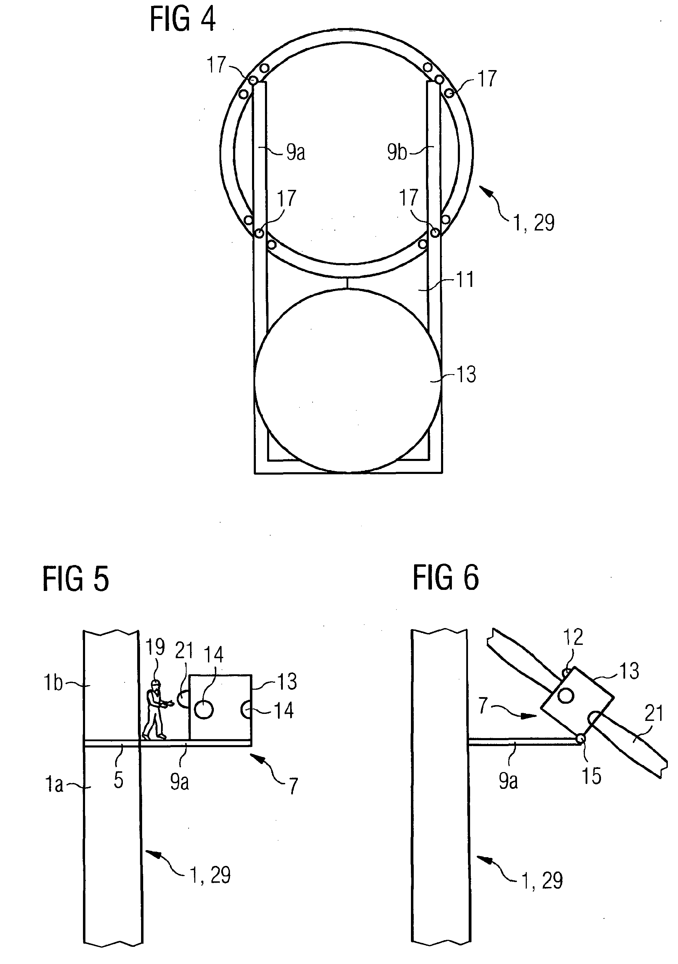

With reference to Figure 1 one can see that the beams 9a, 9b can be inserted into the openings 3 so that the mounting device 7 can be connected to the tower 1. The effect of such connection can be seen in the sectional view of Figure 4.

In this section along section line IV-IV of Figure 1 it can be seen that the two beams 9a, 9b are inserted into the tower 1 and project from one side of the tower 1, i.e. that side which can be seen in Figure 1, to the other side of the tower 1, i.e. that side which is opposite of the side which can be seen in Figure 1. The beams 9a, 9b can be connected to the lower tower section 1a by means of bolts 17 which are also used as connecting means to connect the lower tower section 1a with the upper tower section 1b. Therefore, the bolts 17 have two purposes at the same time, i.e. to hold the two tower sections 1a, 1b together and to also temporarily fix the beams 9a, 9b to the tower 1. It can also be seen that the part of the mounting device 7 which carries the hub 13 projects from the circumference of the tower 1 out into the free air.

The same arrangement can be seen in Figures 5 to 7 from different perspectives, whereby rotor blades 21 are connected to the hub 13 by being inserted into the openings 14.

Figure 5 shows this arrangement in a side view in a first position of the mounting device 7, whereby the platform 11 is essentially horizontally orientated, i.e. in parallel to the beams 9a, 9b, in an assembly position. A member of staff 19 is standing on the platform 11 and inserting a first rotor blade 21 into one of the openings 14 of the hub 13. In this first position of the mounting device 7 and thus of the hub 13 it is assured that the rotor blades 21 will be orientated in an essentially horizontal way. Therefore if wind comes from the side it cannot get a firm grip onto the rotor blades 21 and thus forces inflicted onto the hub 7 in this position are comparatively low in comparison with a positioning of the hub in which the rotor blades 21 were aligned along a vertical plane.

Figure 6 shows the mounting device 7 while being transferred from the assembly position into a second position. Thereby, the hub 13 is lifted by a rope connecting the hub via a hook 14 to a crane (not shown). The platform 11, which constitutes a second part of the mounting device 7 in contrast to the first part of the mounting device 7 which is comprised of the two beams 9a, 9b, is thus tilted along the tilting axis of the hinge 15.

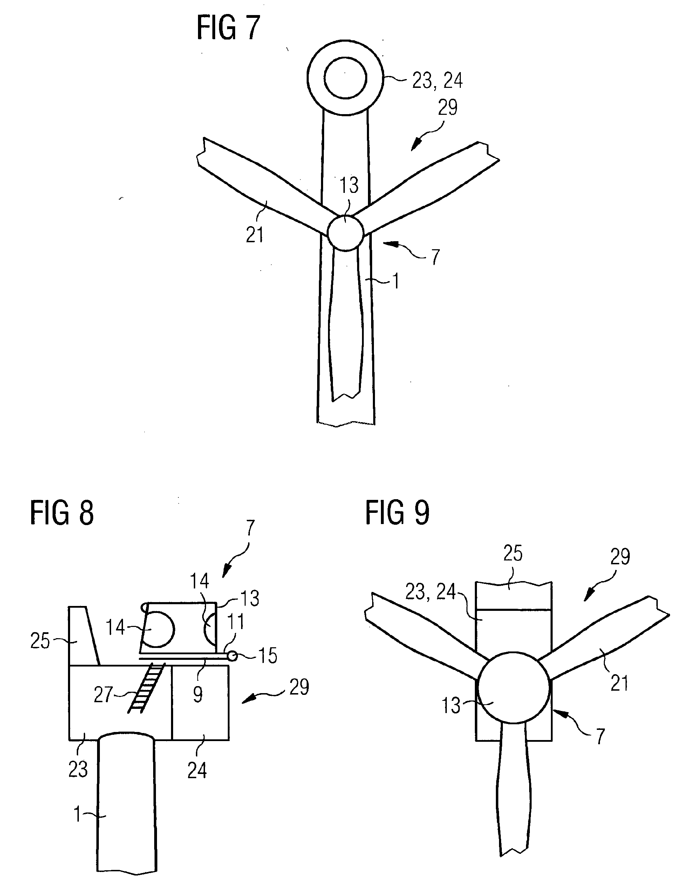

Figure 7 shows the same arrangement in a front view in the second position, i.e. a position from which the hub 13 with the rotor blades 21 can be transferred to a final assembly point at the nacelle 23 and thus to a direct drive generator 24 connected to the nacelle 23 of the wind turbine 29. The hub 13 with the rotor blades 21 is now in the upright position with a vertical orientation of the rotor blades 21. It can also be seen that the wind turbine 29 already comprises the nacelle 23 and the generator 24 on top of the tower 1. The hub 13 with the rotor blades 21 is now to be attached to the nacelle 23 and thus to the generator 24 by connecting these two elements 7, 24 . It may be noted that in case a generator (in such case an indirect drive generator in contrast to the direct drive generator 24 depicted here) is situated inside of the nacelle 23, the hub 13 can be connected to the nacelle 23 along a drivetrain (not shown) which projects from the hub 7 into the inside of the nacelle 23. At any event, the hub 13 now needs to be disconnected at the interface 16 from the mounting device 7 and then simply be lifted up while remaining in the same orientation as shown in Figure 7. This means that the rotor blades 21 in their overall extension will remain orientated in a vertical way and that the hub 13 is simply attached to the nacelle 23 (and the generator 24) at that face side which faces away from the side which can be seen in Figure 7.

Figures 8 to 11 show a second, alternative, embodiment of the method and mounting device according to the invention.

Figure 8 shows a wind turbine 29 comprising a tower 1 with a nacelle 23 and a direct drive generator 24 on top. On the top side of the nacelle 23 facing away from the tower 1 there is positioned a cooler 25 on the left-hand side and a mounting device 7 according to an embodiment of the invention on the right-hand side. Via a ladder 27 going from the inside of the nacelle 23 up onto the roof of the nacelle 23 staff can climb up to the mounting device 7 which again comprises a first part 9 and a second part 11, which latter is again realized as a kind of platform. Essentially, the mounting device 7 in Figures 8 to 11 is realized in a very similar way to the one shown in the context of Figures 2 to 7. Only the first part 9 need not necessarily comprise beams but may also comprise a platform or a plane instead. This first part 9 is firmly attached to the nacelle 23 and to the generator 24, either on a permanent basis or temporarily. It may be noted that also parts of the mounting device 7 (such as the second part 11) may be temporarily connected to the nacelle 23 and/or the generator 24 while other parts such as the first part 9 may be connected to the nacelle 23 and/or to the generator 24 on a permanent basis. The same principle also applies to the embodiment as shown in the context of Figures 2 to 7 with respect to fixing parts of the mounting device 7 shown there to the tower 1.

Figure 9 shows the same arrangement from above, whereby rotor blades 21 have been inserted into the openings 14 of the hub 7. Both in Figures 8 and 9, the mounting device 7 is in a first position, again an assembly position in analogy to the first position shown in Figures 2 to 5 for the first embodiment described.

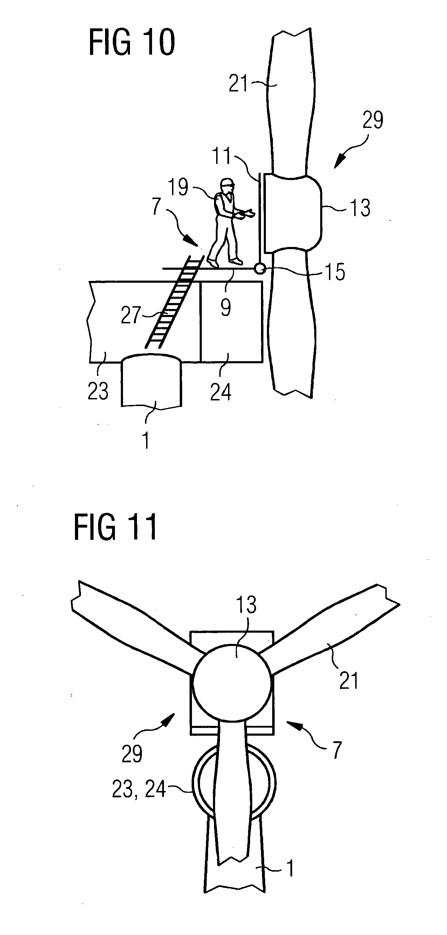

Figure 10 shows the whole arrangement in a second position (again comparable to the corresponding position as described in the context of Figure 7) with a member of staff 19 pushing the hub 13 together with the second part 11 of the mounting device 7 into an upright position in which the main extension of the rotor blades 21 is in general a vertical one.

Figure 11 shows the same arrangement as in Figure 10 in a front view so that it can be seen that the hub 13 only has to be deattached from the mounting device 7 and then lowered down to the level of the nacelle 23 where it can then be connected to the nacelle 23 and to the generator 24 in an analogous way as mentioned in the context of Figure 7.

Although the present invention has been disclosed in the form of preferred embodiments and variations thereon, it will be understood that numerous additional modifications and variations could be made thereto without departing from the scope of the invention. In particular, the shape and elements of the mounting device as well as its position with reference to the tower and/or the nacelle may vary substantially, depending on influences such as the type and size of the wind turbine in question, the area where it is operated and many more.

For the sake of clarity, it is to be understood that the use of "a" or "an" throughout this application does not exclude a plurality, and "comprising" does not exclude other steps or elements.

## Claims

1. Method for assembly and/or maintenance of a wind turbine (29), whereby at least one rotor blade (21) is attached to and/or detached from a hub (13) of the wind turbine (29) while
the hub (13) is removably fixed to a mounting device (7)
positioned at a substantial distance above a ground surface level, wherein
the mounting device (7) comprises at least one hinge (15) along which the hub (13) can be rotated from a first position into a second position.

2. Method according to claim 1, whereby the mounting device (7) is connected to the wind turbine (29).

3. Method according to claim 1 or 2, whereby the rotor blade (21) is attached to and/or detached from the hub (13) in an essentially horizontal orientation.

4. Method according to any of the preceding claims, whereby the mounting device (7) is at least in part permanently connected to the wind turbine (29).

5. Method according to any of the preceding claims, whereby the mounting device (7) is at least in part temporarily connected to the wind turbine (29).

6. Method according to any one of claims 2 to 5, whereby the mounting device (7) is connected to a nacelle (23) and/or a generator (24) of the wind turbine (29).

7. Method according to any of claims 2 to 6, whereby the mounting device (7) is connected to a tower (1) of the wind turbine (29).

8. Method according to claim 7, whereby the mounting device (7) is connected to the tower (1) at a level below a nacelle level of the wind turbine (29).

9. Method according to any of the preceding claims, whereby the mounting device (7) comprises a platform (11) and
preferably at least one beam (9a, 9b) supporting the platform (11).

10. Method according to any of the preceding claims, whereby the mounting device (7) is connected to the wind turbine (29) through at least one opening (3) in the wind turbine (29).

11. Method according to any of claims 2 to 10, whereby the mounting device (7) is connected to a tower (1) of the wind turbine (29) using assembly equipment (17) for assembling two adjacent sections (1a, 1b) of the tower (1).

12. Method according to any of the preceding claims, whereby the mounting device (7) comprises a first part (9) with a first main extension and a second part (11) with a second main extension at least in one mode of operation which second part (11) is hingedly connected to the first part (9).

13. Mounting device (7) for assembly and/or maintenance of a wind turbine (29), comprising connection means (9a, 9b, 14) for connecting it to a holding device (1, 31), which is realized to hold the mounting device (7) in a position at a substantial distance above a ground surface level, **characterized in that**
the mounting device comprises an interface (16) realized to removably fix a hub (13) of a wind turbine (29) to the mounting device (7), before the hub (13) will later be fixed to a nacelle of the wind turbine (29), and **in that**
the mounting device comprises at least one hinge (15) along which the hub (13) can be rotated from a first position into a second position.

14. Wind turbine (29) comprising at least one section (1a) of a tower (1) and equipped with a mounting device (7) according to claim 13, the wind turbine (29) being realized as the holding device.

## Patentansprüche

1. Verfahren für die Montage und/ oder Instandhaltung einer Windenergieanlage (29), bei dem mindestens ein Rotorblatt (21) an einer Nabe (13) der Windenergieanlage (29) angebracht und/ oder davon abgenommen wird, während die Nabe (13) abnehmbar an einer Befestigungsvorrichtung (7) befestigt ist, die in einem beträchtlichen Abstand über einer Geländeoberfläche positioniert ist, wobei
die Befestigungsvorrichtung (7) mindestens ein Scharnier (15) umfasst, an dem entlang sich die Nabe (13) aus einer ersten Position in eine zweite Position drehen lässt.

2. Verfahren nach Anspruch 1, bei dem die Befestigungsvorrichtung (7) mit der Windenergieanlage (29) verbunden ist.

3. Verfahren nach Anspruch 1 oder 2, bei dem das Rotorblatt (21) in im Wesentlichen horizontaler Ausrichtung an der Nabe (13) angebracht und/ oder davon abgenommen wird.

4. Verfahren nach einem der vorhergehenden Ansprüche, bei dem die Befestigungsvorrichtung (7) zumindest teilweise dauerhaft mit der Windenergieanlage (29) verbunden ist.

5. Verfahren nach einem der vorhergehenden Ansprüche, bei dem die Befestigungsvorrichtung (7) zumindest teilweise vorübergehend mit der Windenergieanlage (29) verbunden ist.

6. Verfahren nach einem der Ansprüche 2 bis 5, bei dem die Befestigungsvorrichtung (7) mit einer Gondel (23) und/ oder einem Generator (24) der Windenergieanlage (29) verbunden ist.

7. Verfahren nach einem der Ansprüche 2 bis 6, bei dem die Befestigungsvorrichtung (7) mit einem Turm (1) der Windenergieanlage (29) verbunden ist.

8. Verfahren nach Anspruch 7, bei dem die Befestigungsvorrichtung (7) auf einer Höhe unterhalb der Höhe der Gondel der Windenergieanlage (29) mit dem Turm (1) verbunden ist.

9. Verfahren nach einem der vorhergehenden Ansprüche, bei dem die Befestigungsvorrichtung (7) eine Plattform (11) und vorzugsweise mindestens einen die Plattform (11) tragenden Balken (9a, 9b) umfasst.

10. Verfahren nach einem der vorhergehenden Ansprüche, bei dem die Befestigungsvorrichtung (7) durch mindestens eine Öffnung (3) in der Windenergieanlage (29) hindurch mit der Windenergieanlage (29) verbunden ist.

11. Verfahren nach einem der Ansprüche 2 bis 10, bei dem die Befestigungsvorrichtung (7) unter Verwendung eines Montagesatzes (17) zum Montieren von zwei nebeneinanderliegenden Abschnitten (1a, 1b) eines Turms (1) der Windenergieanlage (29) mit dem Turm (1) verbunden ist.

12. Verfahren nach einem der vorhergehenden Ansprüche, bei dem die Befestigungsvorrichtung (7) einen ersten Teil (9) mit einer ersten Hauptausdehnung und in zumindest einem Betriebsmodus einen zweiten Teil (11) mit einer zweiten Hauptausdehnung umfasst, wobei der zweite Teil (11) an den ersten Teil (9) angelenkt ist.

13. Befestigungsvorrichtung (7) für die Montage und/ oder Instandhaltung einer Windenergieanlage (29) mit Verbindungsmitteln (9a, 9b, 14) zum Verbinden mit einer Haltevorrichtung (1, 31), die so ausgeführt ist, dass sie die Befestigungsvorrichtung (7) in einer Position in einem beträchtlichen Abstand über einer Geländeoberfläche hält, **dadurch gekennzeichnet, dass**
die Befestigungsvorrichtung eine Kontaktfläche (16) umfasst, die dazu dient, eine Nabe (13) einer Windenergieanlage (29) abnehmbar an der Befestigungsvorrichtung (7) zu befestigen, bevor die Nabe (13) später an einer Gondel der Windenergieanlage (29) befestigt wird, und dadurch, dass die Befestigungsvorrichtung mindestens ein Scharnier (15) umfasst, an dem entlang sich die Nabe (13) aus einer ersten Position in eine zweite Position drehen lässt.

14. Windenergieanlage (29) mit mindestens einem Abschnitt (1a) eines Turms (1), die mit einer Befestigungsvorrichtung (7) nach Anspruch 13 ausgestattet ist, wobei die Windenergieanlage (29) als Haltevorrichtung dient.

## Revendications

1. Procédé d'assemblage et/ou de maintenance d'une éolienne (29), moyennant quoi au moins une pale de rotor (21) est attachée à un moyeu (13) de l'éolienne (29) et/ou en est détachée tandis que le moyeu (13) est fixé de manière amovible à un dispositif de montage (7) positionné à une distance substantielle au-dessus du niveau de la surface du sol, dans lequel
le dispositif de montage (7) comprend au moins une articulation (15) le long de laquelle le moyeu (13) peut être mis en rotation depuis une première position vers une deuxième position.

2. Procédé selon la revendication 1, moyennant quoi le dispositif de montage (7) est connecté à l'éolienne (29).

3. Procédé selon la revendication 1 ou 2, moyennant quoi la pale de rotor (21) est attachée au moyeu (13) et/ou en est détachée selon une orientation essentiellement horizontale.

4. Procédé selon l'une quelconque des revendications précédentes, moyennant quoi le dispositif de montage (7) est au moins en partie raccordé définitivement à l'éolienne (29).

5. Procédé selon l'une quelconque des revendications précédentes, moyennant quoi le dispositif de montage (7) est au moins en partie temporairement raccordé à l'éolienne (29).

6. Procédé selon l'une quelconque des revendications 2 à 5, moyennant quoi le dispositif de montage (7) est raccordé à une nacelle (26) et/ou un générateur (24) de l'éolienne (29).

7. Procédé selon l'une quelconque des revendications 2 à 6, moyennant quoi le dispositif de montage (7) est raccordé à un mât (1) de l'éolienne (29).

8. Procédé selon la revendication 7, moyennant quoi le dispositif de montage (7) est raccordé au mât (1) à un niveau en dessous du niveau de la nacelle de l'éolienne (29).

9. Procédé selon l'une quelconque des revendications précédentes, moyennant quoi le dispositif de montage (7) comprend une plate-forme (11) et de préférence au moins une poutre (9a, 9b) supportant la plate-forme (11).

10. Procédé selon l'une quelconque des revendications précédentes, moyennant quoi le dispositif de montage (7) est raccordé à l'éolienne (29) par le biais d'au moins une ouverture (3) dans l'éolienne (29).

11. Procédé selon l'une quelconque des revendications 2 à 10, moyennant quoi le dispositif de montage (7) est raccordé à un mât (1) de l'éolienne (29) en utilisant un équipement d'assemblage (17) permettant d'assembler deux sections adjacentes (1a, 1b) du mât (1).

12. Procédé selon l'une quelconque des revendications précédentes, moyennant quoi le dispositif de montage (7) comprend une première partie (9) avec une première extension principale et une deuxième partie (11) avec une deuxième extension principale, au moins dans un mode d'exploitation laquelle deuxième partie (11) est raccordée de manière articulée à la première partie (9).

13. Dispositif de montage (7) destiné à l'assemblage et/ou à la maintenance d'une éolienne (29), comprenant des moyens de raccordement (9a, 9b, 14) permettant de le raccorder à un dispositif de retenue (1, 31), qui est réalisé pour retenir le dispositif de montage (7) dans une position à une distance substantielle au-dessus du niveau de la surface du sol, **caractérisé en ce que**
le dispositif de montage comprend une interface (16) réalisée pour fixer de manière amovible un moyeu (13) d'une éolienne (29) au dispositif de montage (7), avant que le moyeu (13) soit ultérieurement fixé à une nacelle de l'éolienne (29), et **en ce que**
le dispositif de montage comprend au moins une articulation (15) le long de laquelle le moyeu (13) peut être mis en rotation depuis une première position vers une deuxième position.

14. Eolienne (29) comprenant au moins une section (1a) d'un mât (1) et équipée d'un dispositif de montage (7) selon la revendication 13, l'éolienne (29) étant réalisée en tant que dispositif de retenue.
